# EUROPÄISCHE PATENTSCHRIFT

(11) **EP 2 471 136 B1**
(45) Veröffentlichungstag und Bekanntmachung des Hinweises auf die Patenterteilung: **12.06.2013**
(21) Anmeldenummer: 10740152.3
(22) Anmeldetag: 09.07.2010
(51) Int. Cl.: H01M 8/04, B60H 1/00, B60K 11/04, B60L 11/18, F28D 1/00

(54) **FAHRZEUG MIT WENIGSTENS EINEM KÜHLKREISLAUF ZUM KÜHLEN EINES BRENNSTOFFZELLENSYSTEMS**
VEHICLE WITH AT LEAST ONE COOLANT CIRCUIT FOR COOLING OF A FUEL CELL SYSTEM
VÉHICULE AVEC AU MOINS UNE BOUCLE DE REFROIDISSEMENT POUR LE REFROIDISSEMENT D'UN SYSTÈME DE PILE À COMBUSTIBLE

(30) Priorität: 29.08.2009 DE 102009039364
(43) Veröffentlichungstag der Anmeldung: 04.07.2012
(73) Patentinhaber: Daimler AG, 70327 Stuttgart (DE)
(72) Erfinder: HÖSS, Ralf, 70186 Stuttgart (DE)
(74) Vertreter: Moore, Derek
(86) Internationale Anmeldenummer: PCT/EP2010/004201
(87) Internationale Veröffentlichungsnummer: WO 2011/023261

(56) Entgegenhaltungen:
- WO-A1-03/059664
- JP-A- 2005 251 416
- US-A1- 2006 269 809

## Beschreibung

Die Erfindung betrifft ein Fahrzeug mit wenigstens einem Kühlkreislauf zum Kühlen eines Brennstoffzellensystems nach der im Oberbegriff von Anspruch 1 näher definierten Art.

Ein Brennstoffzellensystem für ein gattungsgemäßes Fahrzeug ist aus der DE 196 29 084 C2 bekannt. Das dort beschriebene Brennstoffzellensystem umfasst einen primären Kühlwärmetauscher, welcher analog der Ausbildung bei Fahrzeugen mit Verbrennungsmotor so angeordnet ist, dass der Staudruck des Fahrtwindes seine Durchströmung mit Umgebungsluft als Kühlluft gewährleistet. Um den Staudruck zu nutzen lassen sich dabei im Wesentlichen nur die Frontflächen des Fahrzeugs für die Kühlwärmetauscher nutzen. Dies bringt entsprechende Einschränkungen und Nachteile mit sich, welche nachfolgend zusammen mit anderen Problemen beschrieben sind.

Die Wärmeabfuhr beim Betrieb von Brennstoffzellen-Antriebssystemen stellt für mobile Anwendungen von PEM-Brennstoffzellen ein leistungsbegrenzendes Problem dar, da der Großteil der erzeugten Verlustwärme über den Kühlkreislauf bei relativ geringen Temperaturdifferenzen zur Umgebung abgeführt werden muss. Bei praxistauglichen Systemaufbauten muss als grober Anhaltspunkt damit gerechnet werden, dass ungefähr genauso viel Abwärme über den Kühlkreislauf abgeführt werden muss, wie elektrische Leistung in der Brennstoffzelle erzeugt wird.

Eine Verbesserung der Wärmeabfuhr des Kühlkreislaufs kann prinzipiell durch eine Erhöhung der Kühleroberfläche, eine Verbesserung der Durchströmung des Kühlwärmetauschers oder durch Anhebung der Kühlmedientemperatur erreicht werden. Bisherige Kühlkonzepte gemäß dem Allgemeinen Stand der Technik nutzen einen oder mehrere dieser Gesichtspunkte, sind allerdings mit den nachstehend beschriebenen Nachteile bzw. Einschränkungen verbunden.

Die maximalen Betriebstemperaturen heutiger PEM-Brennstoffzellenstapel bzw. - stacks liegen bei ca. 80-90 °C. Bestrebungen zur Erhöhung der Temperatur gehen derzeit zu Lasten der Lebensdauer und können aus heutiger Sicht als eher langfristige Zielsetzung eingeordnet werden. Weiterhin ermöglichen wasserbasierte Kühlkreisläufe nur sehr begrenzte weitere Temperatursteigerungen, während hochtemperaturtaugliche Kühlmedien (z. B. Thermoöle) erhöhte Dichtigkeitsanforderungen, Kosten und erhöhten Handlingsaufwand implizieren. Der Erhöhung der Frontfläche der Kühlwärmetauscher, und nur bei diesen ergibt sich der in der oben genannten DE 196 29 084 C2 Effekt hinsichtlich des Staudrucks, sind im Automobilbau enge Grenzen gesetzt. Die hauptsächlichen limitierenden Faktoren sind dabei insbesondere Package- und Designvorgaben, sowie das Bestreben, aus Gründen eines geringen Fahrzeugenergieverbrauchs einen möglichst niedrigen Luftwiderstandbeiwert (cw.A-Wert) zu erzielen. Auch eine Verbesserung der Kühlwirkung durch Einsatz leistungsstarker Gebläse bringt gravierende Nachteile, Die erforderliche Antriebsleistung für die Gebläse führt zu einer starken Steigerung der parasitären Verluste. Dadurch wird der Systemwirkungsgrad gesenkt. Ferner wird die Fahrzeugakustik negativ beeinflusst.

Aus den genannten Gründen stellt die Wärmeabfuhrkapazität des Kühlkreislaufs einen limitierenden Faktor für die elektrische Leistung mobiler Brennstoffzellensysteme in Fahrzeugen dar. Die DE 10 2005 021 413 A1 schafft zur Behebung dieser Problematik bei der Kühlung von Brennstoffzellensystemen in Fahrzeugen einen Aufbau, welcher zusätzliche Flächen im Bereich des Fahrzeugs als Kühlfläche nutzt. Dadurch wird jedoch das Design des Fahrzeugs entsprechend verändert, was häufig nicht gewünscht wird.

Ferner ist in der US 6,370,903 B1 ein Kühlkreislauf für ein Brennstoffzellenfahrzeug beschrieben, welcher zur Kühlung der Brennstoffzelle selbst einen Hochtemperatur-Kühlkreislauf mit einem vom Fahrtwind angeströmtem Kühlwärmetauscher einsetzt. Zusätzlich ist zur Kühlung des Antriebsmotors sowie der elektrischen und elektronischen Komponenten des Fahrzeugs in an sich bekannter Art und Weise ein Niedertemperatur-Kühlkreislauf ausgebildet, welcher ebenfalls von einem vom Fahrtwind angeströmtem Kühlwärmetauscher gekühlt ist.

In der bei heutigen Fahrzeugen typischen Art verfügt das Fahrzeug außerdem über eine Klimatisierungseinrichtung, welche gemäß der hier dargestellten Ausführungsform zur Klimatisierung eines Fahrzeuginnenraums einerseits und zur Unterstützung der Abkühlung des Kühlkreislaufs der Brennstoffzelle andererseits genutzt werden kann. Der Aufbau ist dabei als Wärmepumpe ausgebildet.

Grundsätzlich ist es dabei so, dass auch eine Klimatisierungseinrichtung über einen Klimakühlwärmetauscher verfügen muss, um das in der Klimatisierungseinrichtung eingesetzte Klimamittel wieder entsprechend abzukühlen bzw. zu kondensieren. Dabei ist der Aufbau so, dass sehr häufig dieser Klimakühlwärmetauscher in den Kühlkreislauf der Brennstoffzelle, oder, wie in der US 6,370,903 B1 dargestellt, in den Niedertemperatur-Kühlkreislauf für die elektronischen Komponenten eingebunden ist.

Durch eine solche Einbindung entsteht bei einem den Innenraum kühlenden Einsatz der Klimatisierungseinrichtung immer der Nachteil, dass die in den Kühlkreislauf eingetragene Wärmemenge noch weiter erhöht wird, sodass, insbesondere bei sehr warmen Umgebungstemperaturen, die Abkühlung des Brennstoffzellenstapels weiter verschlechtert wird. Durch diese Verschlechterung der Abkühlung des Brennstoffzellenstapels wird jedoch die Leistungsfähigkeit eines mit dem Brennstoffzellensystem ausgerüsteten Fahrzeugs entsprechend verringert. Die in der US 6,370,903 B1 ebenfalls angesprochene unterstützende Kühlung des Brennstoffzellenkühlkreislaufs über einen Verdampfer der Klimatisierungseinrichtung weist dabei den Nachteil auf, dass eine solche Abkühlung mit einem vergleichsweise hohen Energieaufwand in der Klimatisierungseinrichtung verbunden ist, sodass der Gesamtwirkungsgrad eines so ausgerüsteten Fahrzeugs darunter leidet.

In der als nächstliegender Stand der Technik anzusehenden US 2006/269809 A1 ist ein Fahrzeug offenbart, bei welchem neben einem Kühlkreislauf zum Kühlen eines Brennstoffzellensystems zwei weitere Kühlkreisläufe für andere Komponenten vorgesehen sind. Jeder der Kühlkreisläufe hat einen Kühlwärmetauscher. Die Kühlwärmetauscher der drei Kühlkreisläufe werden vom Fahrtwind seriell nacheinander durchströmt.

Es ist nun die Aufgabe der hier vorliegenden Erfindung, ein Fahrzeug mit wenigstens einem Kühlkreislauf zum Kühlen eines Brennstoffzellensystems zu schaffen, welches eine maximale Kühlleistung bei minimalem Energiebedarf zur Kühlung ermöglicht, und so eine hohe Leistungsfähigkeit des Brennstoffzellensystems auch bei schwierigen Umgebungsbedingungen erlaubt.

Erfindungsgemäß wird diese Aufgabe durch die im kennzeichnenden Teil des Anspruchs 1 genannten Merkmale gelöst. Die abhängigen Ansprüche geben dabei vorteilhafte Ausgestaltungen und Weiterbildungen des erfindungsgemäßen Fahrzeugs an.

Dadurch, dass der Kühlwärmetauscher bei dem erfindungsgemäßen Fahrzeug in wenigstens zwei Stufen ausgebildet ist, wird die zur Kühlung zur Verfügung stehende Fläche in dem Kühlwärmetauscher deutlich erhöht. Die Anordnung der wenigstens zwei Stufen des Kühlwärmetauschers so, dass sie vom Fahrtwind als Kühlluft seriell. nacheinander durchströmt sind, ermöglicht die Verwendung der wenigstens zwei Stufen, ohne dass die benötigte Anströmfläche sich vergrößert. Der Aufbau kann somit in bestehende Fahrzeugkonzepte problemlos integriert werden, da hierdurch lediglich die Dicke des gesamten Kühl-Wärmetauschers bzw. des Stapels der Stufen des Kühlwärmetauschers in Fahrtrichtung durch die höhere Anzahl an Stufen entsprechend erhöht wird, ohne dass eine größere angeströmte Fläche notwendig wäre.

Gemäß einer sehr günstigen Ausgestaltung des erfindungsgemäßen Fahrzeugs ist es dabei vorgesehen, dass die wenigstens zwei Stufen des Kühlwärmetauschers von einem im Kühlkreislauf strömenden Kühlmedium seriell nacheinander durchströmt sind, wobei die vom Fahrtwind zuletzt durchströmte Stufe vom Kühlmedium zuerst durchströmt ist. Da die einzelnen Stufen des Kühlwärmetauschers in Fahrtrichtung nacheinander angeordnet sind, werden diese vom Fahrtwind als Kühlluft auch nacheinander durchströmt. Das bedeutet, dass in den einzelnen Stufen eine unterschiedliche Temperaturdifferenz zwischen dem abzukühlenden Kühlmedium in der jeweiligen Stufe und den dieses Kühlmedium abkühlenden Fahrtwind als Kühlluft vorliegt. Dementsprechend können die einzelnen Stufen des Kühlwärmetauschers unterschiedlich stark gekühlt werden. Durch die Anordnung der einzelnen Stufen so, dass diese seriell von dem Kühlmedium durchströmt werden, kann nun erreicht werden, dass die Stufe des Kühlwärmetauschers, welche vom wärmsten Kühlmedium durchströmt wird, auch bereits mit dem wärmsten, also dem durch die andere Stufe bereits aufgeheizten Fahrtwind gekühlt wird. Damit wird erreicht, dass die Abkühlung des Kühlmediums bestmöglich realisiert wird, da das noch sehr warme Kühlmedium von vergleichsweise warmem Fahrtwind gekühlt wird, sodass hier eine ausreichende Temperaturdifferenz vorliegt, um zumindest eine Vorkühlung des Kühlmediums in der aus Sicht des Kühlmediums ersten und aus Sicht des Fahrtwinds letzten Stufe zu realisieren. In der einen oder den nachfolgenden Stufen wird dann das Kühlmedium zunehmend kühler sein, ebenso wie der Fahrtwind, sodass eine vollständige Abkühlung des Kühlmediums auf das Temperaturniveau, welches für die volle Leistungsfähigkeit des Brennstoffzellensystems benötigt wird, erfolgen kann.

In einer vorteilhaften Weiterbildung des erfindungsgemäßen Fahrzeugs ist es außerdem vorgesehen, dass der Kühlkreislauf einen ersten Abschnitt als Hochtemperatur-Kühlkreislauf zur Kühlung des Brennstoffzellenstapels aufweist, wobei parallel zum Kühlwärmetauscher ein zweiter Abschnitt als Niedertemperatur-Kühlkreislauf zur Kühlung von elektrischen und/oder elektronischen Komponenten ausgebildet ist, wobei ein Niedertemperatur-Kühlwärmetauscher in dem Kühlkreislauf parallel zu dem wenigstens zweistufigen Kühlwärmetauscher ausgebildet und so angeordnet ist, dass der Niedertemperatur-Kühlwärmetauscher vom Fahrtwind seriell zu den wenigstens zwei Stufen des Kühlwärmetauschers durchströmt ist. Gemäß dieser besonders vorteilhaften Weiterbildung des erfindungsgemäßen Fahrzeugs ist also ein Niedertemperatur-Kühlwärmetauscher in der Art einer weiteren Stufe aus Sicht des Fahrtwinds seriell zu den wenigstens zwei Stufen des Kühlwärmetauschers angeordnet. Der Aufbau ermöglicht damit den aus dem Stand der Technik bei Brennstoffzellenfahrzeugen bekannten und üblichen Niedertemperatur-Kühlkreislauf zur Kühlung von elektrischen und/oder elektronischen Komponenten, wie beispielsweise dem Antriebsmotor und der Leistungselektronik, in den eigentlichen Kühlkreislauf zu integrieren. Der Niedertemperatur-Kühlkreislauf ist dann als zweiter Abschnitt des Kühlkreislaufs ausgebildet, sodass auf zusätzliche Leitungselemente sowie gegebenenfalls eine zusätzliche Kühlmittelfördereinrichtung verzichtet werden kann.

Gemäß einer der möglichen Ausgestaltungen des Fahrzeugs weist dieses in an sich bekannter Art und Weise ferner eine Klimatisierungseinrichtung auf. In der erfindungsgemäßen Ausgestaltung ist es nun besonders vorteilhaft, wenn die Klimatisierungseinrichtung wenigstens einen Klimawärmetauscher aufweist, um das in der Klimatisierungseinrichtung eingesetzte Klimamittel abzukühlen, wobei der Klimawärmetauscher unabhängig vom Kühlkreislauf für das Brennstoffzellensystem ausgebildet ist. Diese unabhängige Ausbildung des Klimakühlwärmetauschers zum Abkühlen bzw. Kondensieren des Klimamittels der Klimatisierungseinrichtung vom Kühlkreislauf für das Brennstoffzellensystem stellt sicher, dass keine zusätzliche Wärme über die Abkühlung des Klimamittels in den Kühlkreislauf für das Brennstoffzellensystem eingetragen wird. Vielmehr wird diese Wärme, welche insbesondere dann anfällt, wenn hohe Umgebungstemperaturen vorliegen und die Kühlung des Brennstoffzellensystems ohnehin schwierig ist, anderweitig weggekühlt, sodass keine negative Beeinflussung dieser zusätzlichen Wärme für das Brennstoffzellensystem bzw. seine Kühlung stattfindet. Damit kann das Brennstoffzellensystem unabhängig von der Klimatisierungseinrichtung gekühlt werden und seine Leistungsfähigkeit bewahren.

In einer besonders günstigen Weiterbildung hiervon ist es dabei vorgesehen, dass der wenigstens eine Klimakühlwärmetauscher in oder vor einem Radlauf des Fahrzeugs ausgebildet ist. Diese Anordnung in den Radläufen des Fahrzeugs kann dabei vollkommen unabhängig von der Kühlfläche des wenigstens zweistufigen Kühlwärmetauschers des Kühlkreislaufs für das Brennstoffzellensystem erfolgen, ohne diesem zur Verfügung stehende Fläche, in welcher ein Staudruck des Fahrtwindes anströmt, zu nehmen. Außerdem wird durch die Anordnung in beziehungsweise vor den Radläufen eine optische Beeinflussung des Fahrzeugs weitgehend ausgeschlossen, sodass diese zusätzlichen Klimakühlwärmetauscher im Design des Fahrzeugs nicht oder nur minimal auffallen.

Weitere vorteilhafte Ausgestaltungen der Erfindung ergeben sich aus den restlichen abhängigen Unteransprüchen und werden anhand des Ausführungsbeispiels deutlich, welches nachfolgend unter Bezugnahme auf die Figuren näher erläutert wird.

Dabei zeigen:
- Fig. 1: ein erfindungsgemäßes Fahrzeug in einer schematischen Darstellung; und
- Fig. 2: ein Kühlkreislauf des erfindungsgemäßen Fahrzeugs in einer bevorzugten Ausführungsform.

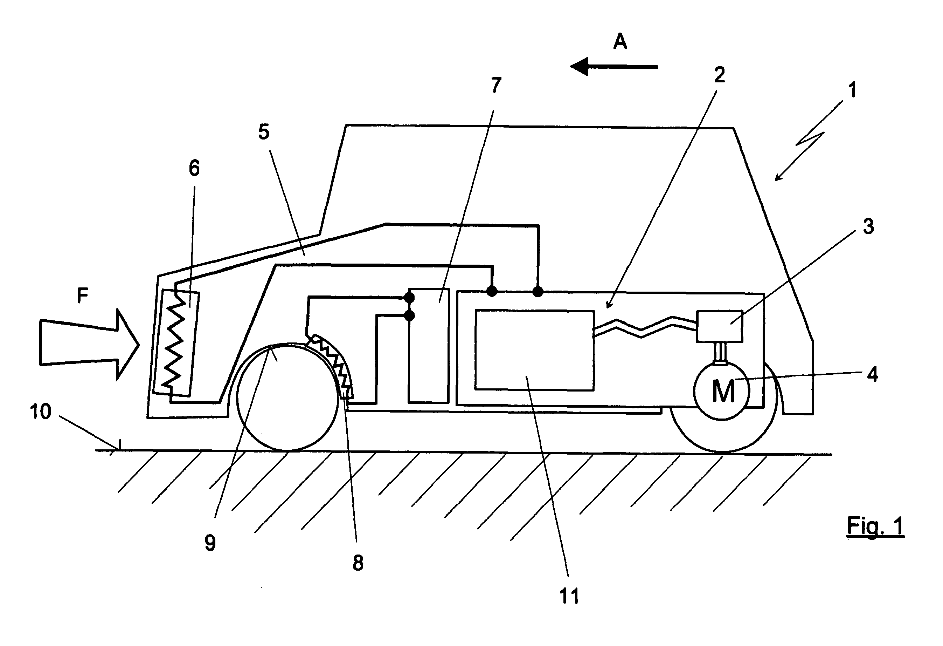

In der Darstellung der Figur 1 ist beispielhaft ein Fahrzeug 1 angeordnet, welches ein Brennstoffzellensystem 2 umfasst, durch welches elektrische Antriebsleistung für das Fahrzeug 1 bereitgestellt wird. Über eine entsprechende Elektronik 3 und einen elektrischen Fahrantrieb in Form einer elektrischen Maschine 4, welche insbesondere als Motor oder beim Abbremsen in an sich bekannter Weise auch als Generator eingesetzt werden kann, ist das Fahrzeug 1 angetrieben. Das Brennstoffzellensystem 2 weist nun wenigstens einen Kühlkreislauf auf, welcher hier beispielhaft durch die Leitungen 5 angedeutet ist. Teil dieses Kühlkreislaufs 5 ist ein Kühlwärmetauscher 6, welcher im Frontbereich des Fahrzeugs 1, also in Fahrtrichtung A vorne angeordnet ist. In an sich bekannter Weise entsteht im Frontbereich des Fahrzeugs 1 ein entsprechender Staudruck, welcher den Kühlwärmetauscher 6 als Fahrtwind F durchströmt und so das im Kühlkreislauf 5 zirkulierende Kühlmedium, typischerweise ein mit einem Frostschutzmittel versehenes Gemisch auf Wasserbasis, entsprechend kühlt. Das Fahrzeug 1 in der Darstellung der Figur 1 soll außerdem über eine Klimatisierungseinrichtung 7 verfügen, welche in an sich bekannter Weise zur Klimatisierung des Innenraums des Fahrzeugs 1 ausgestaltet ist. Die Klimatisierungseinrichtung 7 benötigt zur Abkühlung des in ihr eingesetzten Klimamittels bzw. zur Kondensation des Klimamittels dabei wenigstens einen Klimakühlwärmetauscher 8, welcher hier unabhängig von dem Kühlwärmetauscher 6 des Brennstoffzellensystems 2 bzw. dem Kühlkreislauf 5 des Brennstoffzellensystems 2 ausgebildet ist. Dieser Klimakühlwärmetauscher 8 ist dabei als Radlauf-Wärmetauscher in beziehungsweise vor wenigstens einem der Radläufe 9 des Fahrzeugs 1 angeordnet. Unter einem Radlauf-Wärmetauscher versteht man dabei einen Wärmetauscher, welcher zwischen dem vorderen Stoßfänger und vorderer Radlaufabdeckung oder im Inneren des Radlaufs 9 bzw. des Kotflügels angeordnet ist und von der aufgrund der Vorwärtsbewegung des Fahrzeugs 1 dort strömenden Luft entsprechend angeströmt wird. Der Vorteil eines derartigen Radlauf-Wärmetauschers liegt darin, dass dieser in einem Bereich des Fahrzeugs 1 angeordnet werden kann, ohne dass dieser im Design des Fahrzeugs nach außen sichtbar wird.

Um nun eine bestmögliche Durchströmung dieses Klimakühlwärmetauschers 8 als Radlauf-Wärmetauscher zu erreichen und insbesondere bei stehendem Fahrzeug keine Zirkulation der erwärmten Luft im Inneren des Radlaufs 9 zu bekommen, kann es außerdem vorgesehen sein, dass die Anströmung des Klimakühlwärmetauschers 8 im Radlauf erfolgt und die abströmende Kühlluft nach außerhalb des Radlaufs 9, beispielsweise durch entsprechende Öffnungen im Kotflügel, welche hier nicht dargestellt aber an sich bekannt sind, abgeleitet wird. In besonders günstiger Art und Weise ist es dabei außerdem vorgesehen, dass die anströmende Luft in einer geringeren Höhe über einer Fahrbahn 10 in den Klimakühlwärmetauscher 8 einströmt, als sie durch die Öffnung im Kotflügel wieder abströmt. Dadurch wird ein Kamineffekt erreicht, sodass die nach oben abströmende warme Luft eine Zugwirkung auf den Klimakühlwärmetauscher 8 ausübt und frische Luft durch den Radlauf 9 ansaugt, welche den Klimakühlwärmetauscher 8 entsprechend kühlen kann. Dieser Effekt tritt dabei unabhängig vom Fahrtwind F auf, sodass auch bei stehendem Fahrzeug 1 ein gewisser Kühlungseffekt erreicht werden kann, ohne dass hierfür entsprechende Lüfter oder dergleichen notwendig sind, um eine Zwangskonvektion zu erreichen.

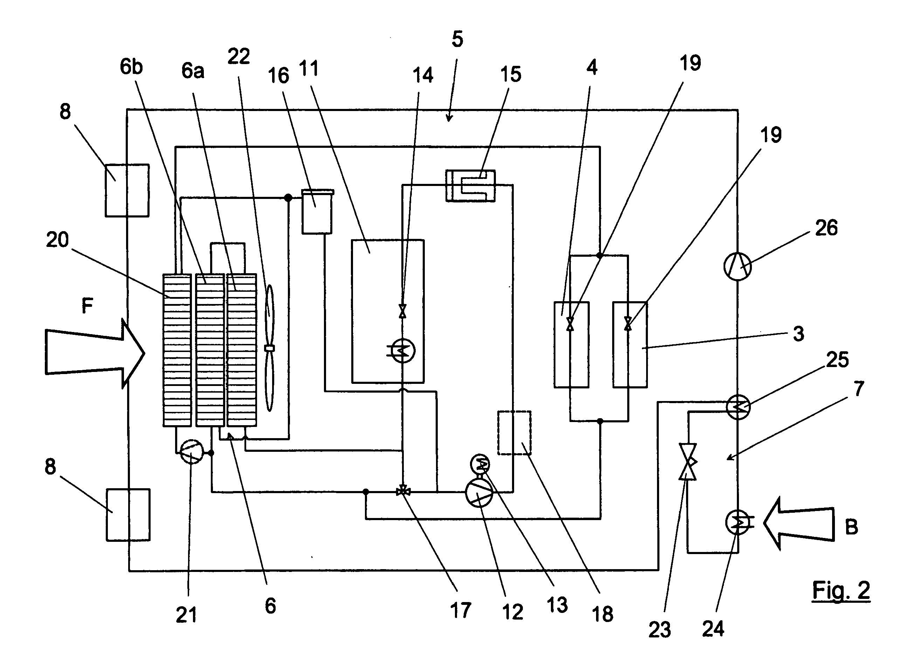

In der Darstellung der Figur 2 ist nun der Kühlkreislauf 5 nochmals in einer sehr detaillierten Darstellung zu erkennen. Der Kühlkreislauf 5 besteht dabei aus einem ersten Abschnitt 5a, dem sogenannten Hochtemperatur-Kühlkreislauf, welcher zur Kühlung eines Brennstoffzellenstapels 11 des Brennstoffzellensystems 2 dient. Dieser Brennstoffzellenstapel 11 kann dabei insbesondere als Stapel von PEM-Brennstoffzellen ausgebildet sein, welche als sogenannte Niedertemperatur-Brennstoffzellen derzeit die für Fahrzeuganwendungen verbreitetsten Brennstoffzellen darstellen. In diesem ersten Abschnitt 5a des Kühlkreislaufs 5 strömt ein Kühlmedium, beispielsweise das angesprochene Wasser-Frostschutz-Gemisch, welches von einer Kühlmittelfördereinrichtung 12, welche beispielsweise über einen Elektromotor 13 angetrieben sein kann, in dem ersten Abschnitt 5a des Kühlkreislaufs 5 bewegt wird. Im Bereich des Brennstoffzellenstapels 11 selbst kann dabei eine Ventileinrichtung 14 vorgesehen sein, welche den Durchfluss durch den Brennstoffzellenstapel 11 entsprechend regelt. Außerdem kann der Kühlkreislauf 5 weitere Elemente, wie beispielsweise einen Filter 15 und einen Ausgleichstank 16 mit umfassen, welche hier beispielhaft dargestellt sind. Das in dem Brennstoffzellenstapel 11 erwärmte Kühlmedium strömt nun über die Kühlmittelfördereinrichtung 12 zu einer ersten Stufe 6a des Kühlwärmetauschers 6, welche von dem Fahrtwind F entsprechend durchströmt wird, um das Kühlmedium abzukühlen. Danach gelangt es zu einem in Richtung des Kühlmediums seriell nachgeschalteten zweiten Stufe 6b des Kühlwärmetauschers, welche ebenfalls von dem Fahrtwind F durchströmt wird, sodass in der zweiten Stufe 6b des Kühlwärmetauschers 6 das Kühlmedium weiter abgekühlt wird. Das Kühlmedium gelangt dann über ein 3-Wege-Ventil 17 und über den Filter 15 zurück in den Brennstoffzellenstapel 11. Das 3-Wege-Ventil 17 ist dabei in derartigen Hochtemperatur-Kühlkreisläufen 5a in Brennstoffzellensystemen 2 entsprechend bekannt und dient insbesondere dazu, während der Startphase des Brennstoffzellenstapels 11 das Kühlmedium im Kreislauf nur durch den Brennstoffzellenstapel 11 und gegebenenfalls weitere zu kühlende Komponenten 18, welche hier optional angedeutet sind, zu pumpen, ohne diese im Kühlwärmetauscher 6 entsprechend abzukühlen, sodass der Brennstoffzellenstapel 11 sich relativ schnell erwärmt und seine Betriebstemperatur zügig erreicht.

Der Kühlkreislauf 5 in der Darstellung der Figur 2 weist außerdem einen zweiten Abschnitt 5b auf, welcher als Niedertemperatur-Kühlkreislauf ausgebildet ist und insbesondere den Fahrantrieb mit seinem Motor 4 und die entsprechende Leistungselektronikkomponenten 3 des Brennstoffzellensystems 5 kühlt. Auch im Bereich der hier beispielhaft parallel durchströmten Elemente des Fahrantriebs und der Leistungselektronik sind entsprechende Ventileinrichtungen 19 vorgesehen, durch welche die Durchströmung entsprechend eingestellt werden kann. Anstelle eines eigenen Niedertemperatur-Kühlkreislaufs, wie es im Stand der Technik häufig üblich ist, ist hierbei der als Niedertemperatur-Kühlkreislauf genutzte zweite Abschnitt 5b in den Kühlkreislauf 5 für das Brennstoffzellensystem 2 entsprechend integriert. Dieser zweite Abschnitt 5b weist einen eigenen Niedertemperatur-Kühlwärmetauscher 20 auf und kann über eine eigene optionale Kühlmittelfördereinrichtung 21 verfügen, sofern dies erforderlich ist. Die optionale Kühlmittelfördereinrichtung 21 sollte dabei in jedem Fall auf einer niedrigeren geodätischen Höhe liegen als der Ausgleichstank 16. Dieser zweite Teilabschnitt 5b des Kühlkreislaufs 5 funktioniert nun so, dass das in ihm enthaltene Kühlmedium nach dem Durchströmen der zu kühlenden Elemente des Fahrantriebs bzw. der elektrischen Maschine 4 und der Elektronikkomponenten 3 über den Niedertemperatur-Kühlwärmetauscher 20 strömt und danach mit dem Kühlmedium in dem Abschnitt 5a des Kühlkreislaufs gemischt wird. Der für den Abschnitt 5b benötigte Teilstrom wird dem Kühlkreislauf 5 dann vor dem Erreichen des 3-Wege-Ventils 17 wieder entnommen, um auch in der Aufwärmphase des Brennstoffzellenstapels 11 eine entsprechende Kühlung der elektrischen bzw. elektronischen Komponenten 3, 4 gewährleisten zu können. Je nach Anordnung der Kühlmittelfördereinrichtung 12 in dem Kühlkreislauf 5 kann dabei auf die optionale Kühlmittelfördereinrichtung 21 gegebenenfalls verzichtet werden. Sowohl der Niedertemperatur - Kühlwärmetauscher 20 als auch die Stufe 6b des Kühlwärmetauschers 6 sind über Entlüftungsleitungen mit dem Ausgleichstank 16 verbunden.

Der Niedertemperatur-Kühlwärmetauscher 20 und die beiden hier dargestellten Stufen 6a, 6b des Kühlwärmetauschers 6 sind dabei in Richtung des sie anströmenden Fahrtwinds F seriell hintereinander angeordnet, sodass diese von dem sie kühlenden Fahrtwind F seriell hintereinander durchströmt werden. Damit wird für alle drei Kühlwärmetauscher zusammen lediglich einmal die Fläche des Kühlwärmetauschers im Frontbereich des Fahrzeugs 1 benötigt, um eine Anströmung der Kühlwärmetauscher 20, 6 zu gewährleisten. Der Fahrtwind F durchströmt nun zuerst den Niedertemperatur-Kühlwärmetauscher 20 und wird dabei geringfügig erwärmt. Dieser geringfügig erwärmte Fahrtwind F durchströmt dann die zweite Stufe 6b des Kühlwärmetauschers 6 und kühlt das in der ersten Stufe 6a bereits vorgekühlte Kühlmedium des ersten Abschnitts 5a des Kühlkreislaufs 5 auf die benötigte Temperatur ab. Danach gelangt der mittlerweile deutlich erwärmte Fahrtwind F in den Bereich der ersten Stufe 6a des Kühlwärmetauschers 6 und nimmt hier eine Art "Vorkühlung" des Kühlmediums in dem ersten Abschnitt 5a des Kühlkreislaufs 5 vor. Durch diesen Aufbau lässt sich mit minimalem Flächenbedarf im Frontbereich des Fahrzeugs 1 eine sehr effiziente Kühlung des Brennstoffzellensystems mit all seinen Komponenten realisieren. Aufgrund der beiden hintereinandergeschalteten Stufen 6a, 6b des Kühlwärmetauschers 6 und des Niedertemperatur-Kühlwärmetauschers 20 kann die Durchströmung dieses Stapels an Kühlwärmetauschern 6, 20 durch den Fahrtwind F gegebenenfalls beeinträchtigt sein. Zumindest in bestimmten Situationen oder bei hohen Außentemperaturen um das Fahrzeug 1 kann es dabei sinnvoll und hilfreich sein, die Anströmung durch den Fahrtwind F mittels eines Gebläses 22 entsprechend zu verstärken und so eine Zwangskonvektion der Kühlluft in dem Stapel aus Kühlwärmetauschern 6, 20 zu schaffen. Dieser Aufbau mit dem Gebläse 22, welches insbesondere temperaturgesteuert betrieben oder nicht betrieben werden kann, ist dabei auch von vielen Fahrzeugen mit herkömmlichem Verbrennungsmotor bekannt und zur Kühlung von Kühlwärmetauschern in Fahrzeugen üblich.

Der Aufbau des Kühlkreislaufs 5 für das Brennstoffzellensystem 2 ist dabei vollkommen unabhängig von der Klimatisierungseinrichtung 7 des Fahrzeugs 1 ausgebildet, welche in der Darstellung der Figur 2 ebenfalls zu erkennen ist. Diese besteht im Wesentlichen aus einem Expansionsventil 23, einem Verdampfer 24 zur Kühlung des Innenraums des Fahrzeugs 1, was hier durch den Wärmefluss mit dem mit B bezeichneten Pfeil dargestellt ist. Außerdem weist die Klimatisierungseinrichtung 7 einen sogenannten inneren Wärmetauscher 25 auf, welcher zur Effizienzsteigerung in Klimatisierungseinrichtungen 7 an sich bekannt und üblich ist. Außerdem ist ein Verdichter 26 zu erkennen, welcher das Klimamittel der Klimatisierungseinrichtung 7 in dem hier dargestellten Ausführungsbeispiel zwei Klimakühlwärmetauschern 8 zuführt, in welchen dieses abgekühlt und/oder kondensiert wird. Wie bereits bei der Darstellung Figur 1 erwähnt, sind diese Klimakühlwärmetauscher 8 dabei unabhängig vom Kühlkreislauf 5 des Brennstoffzellensystems 2 ausgebildet und können insbesondere in den Radläufen 9 des Fahrzeugs 1 angeordnet sein. In der Darstellung der Figur 2 sind dabei zwei der Klimakühlwärmetauscher 8 zu erkennen, welche beispielhaft im rechten und im linken vorderen Radlauf 9 des Fahrzeugs 1 angeordnet sein können.

Der Aufbau in der Darstellung der Figur 2 hat nun, wie bereits erwähnt, den besonderen Vorzug, dass er mit der typischerweise durch das Design des Fahrzeugs 1 zur Verfügung stehenden anströmbaren Fläche für den Kühlwärmetauscher 20, 6 im Frontbereich einen Aufbau realisiert werden kann. Durch den Stapel des Niedertemperatur-Kühlwärmetauschers 20 und der einzelnen Stufen des Kühlwärmetauschers 6 kann mit der vorhandenen Fläche die bestmögliche Kühlung des Kühlmediums in dem Kühlkreislauf 5 realisiert und damit eine bestmögliche Kühlung des Brennstoffzellenstapels 11 ermöglicht werden. Dadurch wird eine hohe Leistungsfähigkeit des Brennstoffzellenstapels 11 erreicht, ohne dass dieser aufgrund der nicht ausreichenden Kühlung in seiner Leistung beschränkt wird.

Dieser prinzipiell mögliche und sehr kompakte und effiziente Aufbau des Kühlkreislaufs 5 in Figur 2 stellt dabei die bestmögliche Kühlung in einem Fahrzeug 1 mit einem Brennstoffzellensystem 2 sicher. Prinzipiell ist jedoch auch die Anwendung des in zwei Stufen 6a, 6b oder gegebenenfalls auch mehr als zwei Stufen aufgeteilten Kühlwärmetauschers 6 in einer Ausführungsform eines Kühlkreislaufs 5 denkbar, bei welchem, analog dem Stand der Technik, ein Niedertemperatur-Kühlkreislauf für die elektrischen oder elektronischen Komponenten 3, 4 unabhängig vom Hochtemperatur-Kühlkreislauf für die Brennstoffzelle 11 sowie gegebenenfalls weitere darin gekühlte Komponenten vorgesehen ist.

## Patentansprüche

1. Fahrzeug mit wenigstens einem Kühlkreislauf zum Kühlen eines Brennstoffzellensystems, wobei der Kühlkreislauf zumindest einen Kühlwärmetauscher, eine Kühlmediumfördereinrichtung und einen Wärmetauscher in einem Brennstoffzellenstapel des Brennstoffzellensystems umfasst, und wobei der Kühlwärmetauscher vom Fahrtwind als Kühlluft angeströmt ist,
**dadurch gekennzeichnet, dass**
der Kühlwärmetauscher (6) in wenigstens zwei Stufen (6a, 6b) ausgebildet ist, welche so angeordnet sind, dass sie vom Fahrtwind (F) seriell nacheinander durchströmt sind.

2. Fahrzeug nach Anspruch 1,
**dadurch gekennzeichnet, dass**
die wenigstens zwei Stufen (6a, 6b) des Kühlwärmetauschers (6) von einem im Kühlkreislauf (5) strömenden Kühlmedium seriell nacheinander durchströmt sind, wobei die vom Fahrtwind (F) zuletzt durchströmte Stufe (6a) vom Kühlmedium zuerst durchströmt ist.

3. Fahrzeug nach Anspruch 1 oder 2,
**dadurch gekennzeichnet, dass**
der Kühlkreislauf (5) als Hochtemperatur-Kühlkreislauf zur alleinigen Kühlung des Brennstoffzellenstapels (11) ausgebildet ist.

4. Vorrichtung nach Anspruch 1 oder 2,
**dadurch gekennzeichnet, dass**
der Kühlkreislauf (5) einen ersten Abschnitt (5a) als Hochtemperatur-Kühlkreislauf zur Kühlung des Brennstoffzellenstapels (11) aufweist, wobei parallel zum Kühlwärmetauscher (6) ein zweiter Abschnitt (5b) als Niedertemperatur-Kühlkreislauf zur Kühlung von elektrischen und/oder elektronischen Komponenten (3, 4) ausgebildet ist, wobei ein Niedertemperatur-Kühlwärmetauscher (20) in dem Kühlkreislauf (5) parallel zu den wenigstens zwei Stufen (6a, 6b) des Kühlwärmetauschers (6) ausgebildet und so angeordnet ist, dass der Niedertemperatur-Kühlwärmetauscher (20) vom Fahrtwind (F) seriell zu den wenigstens zwei Stufen (6a, 6b) des Kühlwärmetauschers (6) durchströmt ist.

5. Fahrzeug nach Anspruch 4,
**dadurch gekennzeichnet, dass**
der Niedertemperatur-Kühlwärmetauscher (20) so angeordnet ist, dass er vom Fahrtwind (F) seriell vor den wenigstens zwei Stufen (6a, 6b) des Kühlwärmetauscher (6) durchströmt ist.

6. Fahrzeug nach einem der Ansprüche 1 bis 5,
**dadurch gekennzeichnet, dass**
die wenigstens zwei Stufen (6a, 6b) des Kühlwärmetauschers (6) und gegebenenfalls der Niedertemperatur-Kühlwärmetauscher (20) im Frontbereich des Fahrzeugs (1) angeordnet sind.

7. Fahrzeug nach einem der Ansprüche 1 bis 6,
**dadurch gekennzeichnet, dass**
im Bereich der wenigstens zwei Stufen (6a, 6b) des Kühlwärmetauschers (6) und gegebenenfalls des Niedertemperatur-Kühlwärmetauschers (20) ein Gebläse (22) angeordnet sind, um die Durchströmung mit Kühlluft zu verstärken.

8. Fahrzeug nach einem der Ansprüche 1 bis 7,
**dadurch gekennzeichnet, dass**
die wenigstens zwei Stufen (6a, 6b) des Kühlwärmetauschers (6) und gegebenenfalls der Niedertemperatur-Kühlwärmetauscher (20) in etwa dieselbe vom Fahrtwind (F) angeströmte Fläche aufweisen und als Stapel hintereinander angeordnet sind.

9. Fahrzeug nach einem der Ansprüche 1 bis 8,
**dadurch gekennzeichnet, dass**
der Brennstoffzellenstapel (11) als Stapel von PEM-Brennstoffzellen ausgebildet ist.

10. Fahrzeug nach einem der Ansprüche 1 bis 9, ferner mit einer Klimatisierungseinrichtung,
**dadurch gekennzeichnet, dass**
die Klimatisierungseinrichtung (7) wenigstens einen Klimakühlwärmetauscher (8) aufweist, um das in der Klimatisierungseinrichtung (7) eingesetzte Klimamittel abzukühlen, wobei der Klimakühlwärmetauscher (8) unabhängig vom Kühlkreislauf (5) für das Brennstoffzellensystem (2) ausgebildet ist.

11. Fahrzeug nach Anspruch 10,
**dadurch gekennzeichnet, dass**
der wenigstens eine Klimakühlwärmetauscher (8) in oder vor einem Radlauf (9) des Fahrzeugs (1) ausgebildet ist.

12. Fahrzeug nach Anspruch 11,
**dadurch gekennzeichnet, dass**
die Luftzufuhr zu dem wenigstens einen Klimakühlwärmetauscher (8) durch die Radläufe (9) des Fahrzeugs (1) oder seitlichen Lufteinlässe im unteren Bereich der Fahrzeugfront erfolgt, während die Luftabfuhr durch Öffnungen in einem Kotflügel im Bereich des Radlaufs (9) erfolgt.

13. Fahrzeug nach Anspruch 12,
**dadurch gekennzeichnet, dass**
der Bereich der Luftzufuhr in geringerer Höhe über der Fahrbahn (10) angeordnet ist, als die Öffnungen zur Luftabfuhr.

## Claims

1. Vehicle with at least one cooling circuit for cooling a fuel cell system, the cooling circuit comprising at least one cooling heat exchanger, a cooling medium conveying device and a heat exchanger in a fuel cell stack of the fuel cell system, and an airstream acting as cooling air impinging on the cooling heat exchanger,
**characterised in that**
the cooling heat exchanger (6) is designed in at least two stages (6a, 6b) which are arranged such that the airstream (F) flows through them consecutively.

2. Vehicle according to claim 1,
**characterised in that**
a cooling medium flowing in the cooling circuit (5) flows consecutively through the at least two stages (6a, 6b) of the cooling heat exchanger (6), the cooling medium first flowing through the stage (6a) through which the airstream (F) flows last.

3. Vehicle according to claim 1 or 2,
**characterised in that**
the cooling circuit (5) is designed as a high-temperature cooling circuit for the exclusive cooling of the fuel cell stack (11).

4. Vehicle according to claim 1 or 2,
**characterised in that**
the cooling circuit (5) has a first section (5a) acting as a high-temperature cooling circuit for the cooling of the fuel cell stack (11), with a second section (5b) parallel to the cooling heat exchanger (6) being designed as a low-temperature cooling circuit for cooling electric and/or electronic components, wherein a low-temperature cooling heat exchanger (20) is formed in the cooling circuit (5) parallel to the at least two stages (6a, 6b) of the cooling heat exchanger (6) and is arranged such that the airstream (F) flows through the low-temperature cooling heat exchanger (20) in series with the at least two stages (6a, 6b) of the cooling heat exchanger (6).

5. Vehicle according to claim 4,
**characterised in that**
the low-temperature cooling heat exchanger (20) is arranged such that the airstream (F) flows through it in series before the at least two stages (6a, 6b) of the cooling heat exchanger (6).

6. Vehicle according to any of claims 1 to 5,
**characterised in that**
the at least two stages (6a, 6b) of the cooling heat exchanger (6) and the low-temperature cooling heat exchanger (20), if fitted, are located in the front region of the vehicle (1).

7. Vehicle according to any of claims 1 to 6,
**characterised in that**
a fan (22) is provided in the region of the at least two stages (6a, 6b) of the cooling heat exchanger (6) and the low-temperature cooling heat exchanger (20), if fitted, for reinforcing the cooling air flow through the system.

8. Vehicle according to any of claims 1 to 7,
**characterised in that**
the at least two stages (6a, 6b) of the cooling heat exchanger (6) and the low-temperature cooling heat exchanger (20), if fitted, have approximately the same surface area impinged on by the airstream (F) and are arranged one behind the other in the form of a stack.

9. Vehicle according to any of claims 1 to 8,
**characterised in that**
the fuel cell stack (11) is designed as a stack of PEM fuel cells.

10. Vehicle according to any of claims 1 to 9, further comprising an air conditioning unit,
**characterised in that**
the air conditioning unit (7) comprises at least one air conditioning cooling heat exchanger (8) for cooling the air conditioning fluid used in the air conditioning unit (7), the air conditioning cooling heat exchanger (8) being independent of the cooling circuit (5) for the fuel cell system (2).

11. Vehicle according to claim 10,
**characterised in that**
the at least one air conditioning cooling heat exchanger (8) is formed in or in front of a wheel arch (9) of the vehicle (1).

12. Vehicle according to claim 11,
**characterised in that**
the air is supplied to the at least one air conditioning cooling heat exchanger (8) through the wheel arches (9) of the vehicle (1) or through lateral air inlets in the lower region of the vehicle front, while the air is discharged through openings in a mudguard in the region of the wheel arch (9).

13. Vehicle according to claim 12,
**characterised in that**
the region of air supply is situated at a lower level above the road surface (10) than the openings for air discharge.

## Revendications

1. Véhicule doté d'au moins un circuit de refroidissement permettant de refroidir un système de piles à combustible, le circuit de refroidissement comprenant au moins un échangeur de chaleur de refroidissement, un dispositif d'alimentation en agent réfrigérant et un échangeur thermique dans un empilement de piles à combustible du système de piles à combustible, et l'échangeur de chaleur à refroidissement étant traversé par l'air généré par le déplacement du véhicule, **caractérisé en ce que** l'échangeur de chaleur de refroidissement (6) comporte au moins deux niveaux (6a, 6b) qui sont disposés de telle sorte que l'air dû au déplacement du véhicule (F) les traverse en série l'un après l'autre.

2. Appareil selon la revendication 1, **caractérisé en ce qu'**un agent réfrigérant s'écoulant dans le circuit de refroidissement (5) traverse les au moins deux niveaux (6a, 6b) de l'échangeur de chaleur de refroidissement (6) en série l'un après l'autre, le niveau (6a) traversé en dernier par l'air dû au déplacement (F) étant d'abord traversé par l'agent réfrigérant.

3. Véhicule selon la revendication 1 ou la revendication 2, **caractérisé en ce que** le circuit de refroidissement (5) est conçu comme un circuit de refroidissement haute température permettant de refroidir uniquement l'empilement de piles à combustible (11).

4. Dispositif selon la revendication 1 ou la revendication 2, **caractérisé en ce que** le circuit de refroidissement (5) présente une première section (5a) en tant que circuit de refroidissement haute température permettant de refroidir l'empilement de piles à combustible (11), parallèlement à l'échangeur de chaleur à refroidissement (6) une seconde section (5b) est conçue comme circuit de refroidissement basse température permettant de refroidir des composants électriques et/ou électroniques (3, 4), un échangeur de chaleur de refroidissement basse température (20) est conçu dans le circuit de refroidissement (5) parallèlement à les au moins deux niveaux (6a, 6b) de l'échangeur de chaleur de refroidissement (6) et disposé de telle sorte que l'échangeur de chaleur de refroidissement basse température (20) soit traversé en série par l'air dû au déplacement (F) vers les au moins deux niveaux (6a, 6b) de l'échangeur de chaleur de refroidissement (6).

5. Véhicule selon la revendication 4, **caractérisé en ce que** l'échangeur de chaleur de refroidissement basse température (20) est disposé de telle sorte qu'il soit parcouru par l'air dû au déplacement (F) avant les au moins deux niveaux (6a, 6b) de l'échangeur de chaleur de refroidissement (6).

6. Véhicule selon l'une quelconque des revendications 1 à 5, **caractérisé en ce que** les au moins deux niveaux (6a, 6b) de l'échangeur de chaleur de refroidissement (6) et le cas échéant de l'échangeur de chaleur de refroidissement basse température (20) est disposé dans la région avant du véhicule.

7. Véhicule selon l'une quelconque des revendications 1 à 6, **caractérisé en ce que** dans la région des au moins deux niveaux (6a, 6b) de l'échangeur de chaleur de refroidissement (6) et le cas échéant de l'échangeur de chaleur de refroidissement basse température (20) est disposé un ventilateur (22) qui permet de renforcer le passage de l'air de refroidissement.

8. Véhicule selon l'une quelconque des revendications 1 à 7, **caractérisé en ce que** les au moins deux niveaux (6a, 6b) de l'échangeur de chaleur de refroidissement (6) et le cas échéant de l'échangeur de chaleur basse température (20) présentent des surfaces d'écoulement de l'air dû au déplacement (F) quasiment identiques et sont empilés l'un derrière l'autre.

9. Véhicule selon l'une quelconque des revendications précédentes de 1 à 8, **caractérisé en ce que** l'empilement de piles à combustible (11) est conçu comme un empilement de piles à combustible à membrane électrolytique polymère.

10. Véhicule selon l'une quelconque des revendications 1 à 9, en outre avec un dispositif de climatisation, **caractérisé en ce que** le dispositif de climatisation (7) présente au moins un échangeur de chaleur de refroidissement de climatisation (8) permettant de refroidir le liquide de climatisation utilisé dans le dispositif de climatisation (7), l'échangeur de chaleur de refroidissement de climatisation (8) étant conçu indépendamment du circuit de refroidissement (5) pour le système de piles à combustible (2).

11. Véhicule selon la revendication 10, **caractérisé en ce que** l'au moins un échangeur de chaleur de refroidissement de climatisation (8) est conçu dans ou avant un passage de roue (9) du véhicule (1).

12. Véhicule selon la revendication 11, **caractérisé en ce que** l'amenée de l'air vers l'au moins un échangeur de chaleur de refroidissement de climatisation (8) s'effectue par les passages de roue (9) du véhicule (1) ou par des passages d'air latéraux dans la région inférieure de l'avant du véhicule, tandis que l'évacuation de l'air s'effectue par des ouvertures placées dans une aile de la région du passage de roue (9).

13. Véhicule selon la revendication 12, **caractérisé en ce que** la région de l'amenée d'air est placée au-dessus de la voie (10) à une hauteur inférieure à celle des ouvertures servant à l'évacuation d'air.
